# EUROPEAN PATENT APPLICATION

(11) **EP 4 814 747 A1**
(43) Date of publication of application: **30.09.2026**
(21) Application number: 25305447.2
(22) Date of filing: 26.03.2025
(51) Int. Cl.: G06F 16/483, G06F 16/48, G06F 16/683, G06F 16/68, G06F 16/75, G06F 16/783

(54) **SERVER AND METHOD FOR LABELLING OF A MEDIA FILE**

(71) Applicant: Implid Ventures, 69006 Lyon (FR)
(72) Inventor: BRISSE, Aymeric, 63170 Aubière (FR); ROUCHERAY, Stéphane, 63170 Aubière (FR)
(74) Representative: BCF Global

(57) **Abstract**

Methods and servers for labelling of a media file are disclosed. The method includes accessing the media file, generating a first and a second entity tags for the media file respectively indicative of a presence of a first and a second entity detected in the media file between a first start timecode and a first end timecode and between a second start timecode and a second end timecode respectively. The method also includes a collision tag associating a collision between the first and second entity tags and comprising a presence of the first and second entities detected in the media file between a collision start timecode and a collision end timecode, the collision start time code being defined as the latest of the first and second start timecode, the collision end time code being defined as the earliest of the first and second end timecode.

## Description

### FIELD

The present technology relates to computer-implemented methods and systems for media file processing. In particular, systems and methods for labelling of a media file are disclosed.

### BACKGROUND

Various global or local communication networks (the Internet, the World Wide Web, local area networks and the like) offer a user a vast amount of information. There has been a significant growth in the amount of information that is readily available, especially in the case of media content that is broadcast, streamed, or digitally saved. Finding specific sections of media content that are pertinent to a given topic is frequently requested. Metadata associated with the media is typically used to find content related to specific subjects. For instance, a digital video file may be linked to a title, subject, and pertinent keywords that describe the subject of the video.

To capture, analyze, segment, index, retrieve, and/or distribute information from a static document, however, may be very challenging due to the vast amount of information contained in a given media file. Therefore, analyses of a content of a media file usually rely on the metadata associated therewith, which does may not provide precise information about said content. Indeed, media files are not always provided with sufficiently detailed descriptions.

Therefore, a system that can perform concomitant labelling of a media file to provide a precise description of a content of said media file is desirable.

### SUMMARY

Implementations of the present technology have been developed based on developers' appreciation of shortcomings associated with the prior art.

At least one drawback of conventional labelling systems, or labelling pipelines, is that when a user searches for entities present in a media file (e.g. a video file), the labelling system usually generates an index of entities that are detected in the media file. Therefore, in occurrences where the user searches for a plurality of entities (e.g. that are concomitantly present in the media file, for example at a same moment of the video file), the index has to be scanned through a corresponding plurality of times to identify presence of the searched entities. This may increase a computation time and/or computer resources needed to perform the search.

In at least some implementations of the present technology, developers of the present technology have devised methods and systems that allow concomitant search of a plurality of entities, such that a user may search for entities that are c concomitantly present in a media file, without requiring to scan through an index of the identified entities a plurality of times.

Without wishing to be bound to any specific theory, developers of the present technology have realized that enabling a user to search for concomitant appearance of a plurality of entities in a media file may increase user satisfaction.

In a first broad aspect of the present technology, there is provided a computer-implemented method for labelling of a media file. The method includes accessing the media file, generating a first entity tag for the media file, the first entity tag comprising information about a first start timecode, a first end timecode and a presence of a first entity detected in the media file between the first start timecode and the first end timecode, generating a second entity tag for the media file, the second entity tag comprising information about a second start timecode, a second end timecode and a presence of a second entity detected in the media file between the second start timecode and the second end timecode, generating a collision tag associating a collision between the first and second entity tags, the collision tag being based on the first and second entity tags, the collision tag comprising a collision start time code, a collision end timecode and a presence of the first and second entities detected in the media file between the collision start timecode and the collision end timecode, the collision start time code being defined as the latest of the first and second start timecode, the collision end time code being defined as the earliest of the first and second end timecode and storing the collision tag in a database.

In some non-limiting implementations, the method further includes receiving a retrieval instruction from a user, the retrieval instruction comprising a first target entity and a second target entity, accessing the database and, in response to determining that the first and the second target entities are associated with a given collision tag of the database, transmitting, to the user, a first indication associated with the given collision tag and a second indication associated with the given media file associated with the given collision tag.

In some non-limiting implementations, the method further includes, in response to determining that the first and the second target entities are associated with the given collision tag of the database, extracting a target extract from the media file between the collision start timecode and the collision end timecode and transmitting the target extract to the user.

In some non-limiting implementations, generating the first entity tag includes generating a textual description of the first entities in at least one natural language, receiving a retrieval instruction comprises receiving a textual entry and determining that the first target entity is associated with the given collision tag of the database comprises determining that the textual entry matches at least partly the textual description of an entity associated with the given collision tag.

In some non-limiting implementations, the method further includes, upon receiving the retrieval instruction, executing an auto-completion module to complete or adjust the retrieval instruction based on an identification of the first and second entity tags.

In some non-limiting implementations, the media file includes audio data, and generating the first and second entity tags includes employing a speech-to-text component on the audio data.

In some non-limiting implementations, generating the first and second entity tags includes parsing through a text file generated by the speech-to-text component and determining entities present in the media file based on the text file.

In some non-limiting implementations, the media file includes digital files, online content, audio files, video files, live stream media files or a combination thereof.

In some non-limiting implementations, the first entity tag is associated with a type of entity tag selected in a group of entity tag types, said group comprising: audio entity tag type and video entity tag type.

In some non-limiting implementations, the first and second entity tags and the collision tag are saved in an SQL database accessible to a user.

In some non-limiting implementations, the media file includes video data, and generating the first entity tag includes employing a transcript component on the video data to generate a transcript text file representative of the video data under a textual form and executing a Natural Language Processing machine learning algorithm to determine entities present in the media file.

In some non-limiting implementations, the MLA is trained to perform Natural Language Processing tasks.

In some non-limiting implementations, the MLA is trained to perform Named Entity Recognition tasks.

In some non-limiting implementations, the MLA is trained to perform Named Entity Linking tasks.

In a second broad aspect, there is provided a computer-implemented method for retrieving collisions in media files. The method includes receiving a retrieval instruction from a user, the retrieval instruction comprising a first target entity and a second target entity, accessing a database, the database comprising collision tags associating collisions, each of the collision tags comprising a collision start time code, a collision end timecode and a presence of entities detected in the media file between the collision start timecode and the collision end timecode and, in response to determining that the first and the second target entities are associated with a given collision tag of the database, transmitting, to the user, a first indication associated with the given collision tag and a second indication associated with the given media file associated with the given collision tag.

In some non-limiting implementations, the collision tag has been generated by executing, for each of the media files, generating a first entity tag, the first entity tag comprising information about a first start timecode, a second end timecode and a presence of a first entity detected between the first start timecode and the second end timecode, generating a second entity tag, the second entity tag comprising information about, a second start timecode, a second end timecode and a presence of a second entity detected between the second start timecode and the second end timecode and generating the collision tag associating a collision between the first and second entity tags, the collision tag comprising a collision start time code, a collision end timecode and a presence of the first and second entities detected between the collision start timecode and the collision end timecode. The collision start time code is defined as the latest of the first and second start timecode. The collision end time code is defined as the earliest of the first and second end timecode.

In a third broad aspect of the present technology, there is provided a system for concomitant labelling of a media file, the system including a controller and a memory storing a plurality of executable instructions which, when executed by the controller, cause the system to perform the computer-implemented method.

In a fourth broad aspect of the present technology, there is provided a non-transitory computer-readable medium comprising computer-readable instructions that, upon being executed by a system, cause the system to perform the computer-implemented method.

In the context of the present specification, a "server" is a computer program that is running on appropriate hardware and is capable of receiving requests (e.g., from client devices) over a network, and carrying out those requests, or causing those requests to be carried out. The hardware may be one physical computer or one physical computer system, but neither is required to be the case with respect to the present technology. In the present context, the use of the expression a "server" is not intended to mean that every task (e.g., received instructions or requests) or any particular task will have been received, carried out, or caused to be carried out, by the same server (i.e., the same software and/or hardware); it is intended to mean that any number of software elements or hardware devices may be involved in receiving/sending, carrying out or causing to be carried out any task or request, or the consequences of any task or request; and all of this software and hardware may be one server or multiple servers, both of which are included within the expression "at least one server".

In the context of the present specification, "user device" is any computer hardware that is capable of running software appropriate to the relevant task at hand. Thus, some (non-limiting) examples of user devices include personal computers (desktops, laptops, netbooks, etc.), smartphones, and tablets, as well as network equipment such as routers, switches, and gateways. It should be noted that a device acting as a user device in the present context is not precluded from acting as a server to other user devices. The use of the expression "a user device" does not preclude multiple user devices being used in receiving/sending, carrying out or causing to be carried out any task or request, or the consequences of any task or request, or steps of any method described herein.

In the context of the present specification, a "database" is any structured collection of data, irrespective of its particular structure, the database management software, or the computer hardware on which the data is stored, implemented or otherwise rendered available for use. A database may reside on the same hardware as the process that stores or makes use of the information stored in the database or it may reside on separate hardware, such as a dedicated server or plurality of servers.

In the context of the present specification, the expression "information" includes information of any nature or kind whatsoever capable of being stored in a database. Thus information includes, but is not limited to audiovisual works (images, movies, sound records, presentations etc.), data (location data, numerical data, etc.), text (opinions, comments, questions, messages, etc.), documents, spreadsheets, lists of words, etc.

In the context of the present specification, the expression "component" is meant to include software (appropriate to a particular hardware context) that is both necessary and sufficient to achieve the specific function(s) being referenced.

In the context of the present specification, the expression "computer usable information storage medium" is intended to include media of any nature and kind whatsoever, including RAM, ROM, disks (CD-ROMs, DVDs, floppy disks, hard drivers, etc.), USB keys, solid state-drives, tape drives, etc.

In the context of the present specification, unless expressly provided otherwise, an "indication" of an information element may be the information element itself or a pointer, reference, link, or other indirect mechanism enabling the recipient of the indication to locate a network, memory, database, or other computer-readable medium location from which the information element may be retrieved. For example, an indication of a document could include the document itself (i.e. its contents), or it could be a unique document descriptor identifying a file with respect to a particular file system, or some other means of directing the recipient of the indication to a network location, memory address, database table, or other location where the file may be accessed. As one skilled in the art would recognize, the degree of precision required in such an indication depends on the extent of any prior understanding about the interpretation to be given to information being exchanged as between the sender and the recipient of the indication. For example, if it is understood prior to a communication between a sender and a recipient that an indication of an information element will take the form of a database key for an entry in a particular table of a predetermined database containing the information element, then the sending of the database key is all that is required to effectively convey the information element to the recipient, even though the information element itself was not transmitted as between the sender and the recipient of the indication.

In the context of the present specification, the words "first", "second", "third", etc. have been used as adjectives only for the purpose of allowing for distinction between the nouns that they modify from one another, and not for the purpose of describing any particular relationship between those nouns. Thus, for example, it should be understood that, the use of the terms "first server" and "third server" is not intended to imply any particular order, type, chronology, hierarchy or ranking (for example) of/between the server, nor is their use (by itself) intended to imply that any "second server" must necessarily exist in any given situation. Further, as is discussed herein in other contexts, reference to a "first" element and a "second" element does not preclude the two elements from being the same actual real-world element. Thus, for example, in some instances, a "first" server and a "second" server may be the same software and/or hardware, in other cases they may be different software and/or hardware.

Implementations of the present technology each have at least one of the above-mentioned object and/or aspects, but do not necessarily have all of them. It should be understood that some aspects of the present technology that have resulted from attempting to attain the above-mentioned object may not satisfy this object and/or may satisfy other objects not specifically recited herein.

Additional and/or alternative features, aspects and advantages of implementations of the present technology will become apparent from the following description, the accompanying drawings and the appended claims.

### BRIEF DESCRIPTION OF THE DRAWINGS

For a better understanding of the present technology, as well as other aspects and further features thereof, reference is made to the following description which is to be used in conjunction with the accompanying drawings, where:
Figure 1 is a schematic representation of an environment for performing a media file analysis in accordance with non-limiting implementations of the present technology;
Figure 2 is a schematic representation of a user device configured for accessing the environment of Figure 1 in accordance with non-limiting implementations of the present technology;
Figure 3 is a block diagram of a pipeline for labelling a media file according to some non-limiting implementations of the present technology;
Figure 4 is a representation of an execution of the labelling pipeline of Figure 3 on a media file in accordance with non-limiting implementations of the present technology;
Figure 5 illustrates a flow diagram showing operations of a computer-implemented method for labelling of a media file in accordance with non-limiting implementations of the present technology;
Figure 6 illustrates a flow diagram showing operations of a computer-implemented method for retrieving collisions in media files in accordance with non-limiting implementations of the present technology;

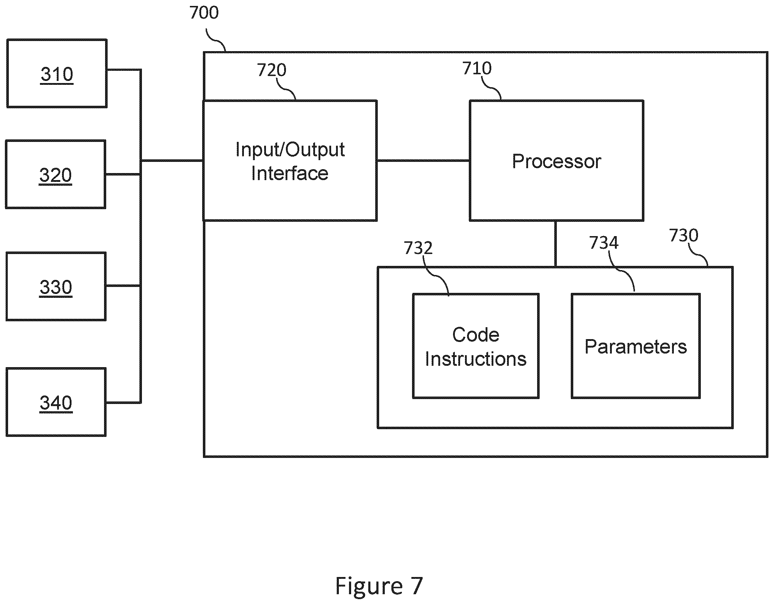

Figure 7 is a schematic block diagram of a controller in accordance with non-limiting implementations of the present technology;
Figure 8 illustrates representations of an interface displayed by the user device of Figure 2; and
Figure 9 illustrates another representation of the interface displayed by the user device of Figure 2.

### DETAILED DESCRIPTION

The examples and conditional language recited herein are principally intended to aid the reader in understanding the principles of the present technology and not to limit its scope to such specifically recited examples and conditions. It will be appreciated that those skilled in the art may devise various arrangements that, although not explicitly described or shown herein, nonetheless embody the principles of the present technology.

Furthermore, as an aid to understanding, the following description may describe relatively simplified implementations of the present technology. As persons skilled in the art would understand, various implementations of the present technology may be of a greater complexity.

In some cases, what are believed to be helpful examples of modifications to the present technology may also be set forth. This is done merely as an aid to understanding, and, again, not to define the scope or set forth the bounds of the present technology. These modifications are not an exhaustive list, and a person skilled in the art may make other modifications while nonetheless remaining within the scope of the present technology. Further, where no examples of modifications have been set forth, it should not be interpreted that no modifications are possible and/or that what is described is the sole manner of implementing that element of the present technology.

Moreover, all statements herein reciting principles, aspects, and implementations of the present technology, as well as specific examples thereof, are intended to encompass both structural and functional equivalents thereof, whether they are currently known or developed in the future. Thus, for example, it will be appreciated by those skilled in the art that any block diagrams herein represent conceptual views of illustrative circuitry embodying the principles of the present technology. Similarly, it will be appreciated that any flowcharts, flow diagrams, state transition diagrams, pseudo-code, and the like represent various processes that may be substantially represented in non-transitory computer-readable media and so executed by a computer or processor, whether or not such computer or processor is explicitly shown.

The functions of the various elements shown in the figures, including any functional block labeled as a "processor", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. In some implementations of the present technology, the processor may be a general-purpose processor, such as a central processing unit (CPU) or a processor dedicated to a specific purpose, such as a digital signal processor (DSP). Moreover, explicit use of the term a "processor" should not be construed to refer exclusively to hardware capable of executing software, and may implicitly include, without limitation, application specific integrated circuit (ASIC), field programmable gate array (FPGA), read-only memory (ROM) for storing software, random access memory (RAM), and non-volatile storage. Other hardware, conventional and/or custom, may also be included.

Software modules, or simply modules which are implied to be software, may be represented herein as any combination of flowchart elements or other elements indicating performance of process steps and/or textual description. Such modules may be executed by hardware that is expressly or implicitly shown. Moreover, it should be understood that module may include for example, but without being limitative, computer program logic, computer program instructions, software, stack, firmware, hardware circuitry or a combination thereof which provides the required capabilities.

With these fundamentals in place, we will now consider some non-limiting examples to illustrate various implementations of aspects of the present technology.

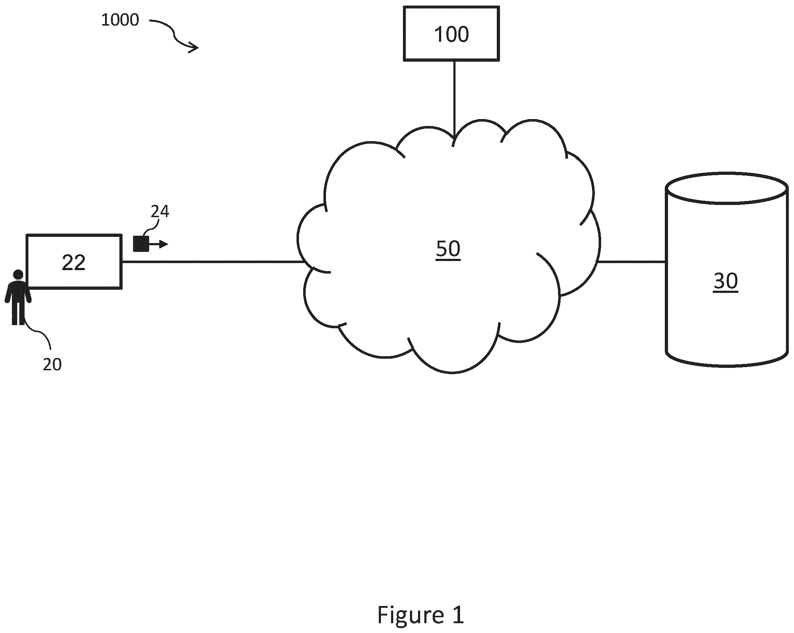

Referring to Figure 1, there is shown a schematic diagram of a system 1000, the system 1000 being suitable for implementing non-limiting implementations of the present technology. It is to be expressly understood that the system 1000 as depicted is merely an illustrative implementation of the present technology. Thus, the description thereof that follows is intended to be only a description of illustrative examples of the present technology. This description is not intended to define the scope or set forth the bounds of the present technology. In some cases, what are believed to be helpful examples of modifications to the system 1000 may also be set forth below. This is done merely as an aid to understanding, and, again, not to define the scope or set forth the bounds of the present technology. These modifications are not an exhaustive list, and, as a person skilled in the art would understand, other modifications are likely possible. Further, where this has not been done (i.e., where no examples of modifications have been set forth), it should not be interpreted that no modifications are possible and/or that what is described is the sole manner of implementing that element of the present technology. As a person skilled in the art would understand, this is likely not the case. In addition, it is to be understood that the system 1000 may provide in certain instances simple implementations of the present technology, and that where such is the case they have been presented in this manner as an aid to understanding. As persons skilled in the art would understand, various implementations of the present technology may be of a greater complexity.

Generally speaking, the system 1000 is configured to provide indication of concomitant presence of entities in a media file to a user of the system 1000. Therefore, the system 1000 may be referred to an environment 1000 for performing a media file analysis. In the context of the present disclosure, a media file may be any file that can be stored on a computer memory, such as for example and without limitation, a video file, an audio file, an image file, digital files, online content, live stream media, *etc.* A media file may have a corresponding file format, such as, for example and without limitation, *.mp4* file format, *.mov* file format, *.png* file format, *.mp3* file format, *.gif* file format, *etc.* A media file may be associated with metadata indicative of characteristics of the media file, such as for example and without limitations, date of creation of the media file, a bit size of the media file, a name of the media file, *etc.*

For example, a user 20 (a given one of a plurality of users of the system 1000) may be a subscriber to a media file analysis service provided by the system 1000. However, the subscription does not need to be explicit or paid for. For example, the user 20 can become a subscriber by virtue of downloading a labelling application from the system 1000, by registering and provisioning a log-in / password combination, by registering and provisioning user preferences and the like. As such, any system variation configured to label content of media files or, more generally, "analyze media file" for the given user can be adapted to execute implementations of the present technology, once teachings presented herein are appreciated. Furthermore, the system 1000 will be described using an example of the system 1000 being a system for analysis of media files. However, implementations of the present technology can be equally applied to other types of the system 1000, as will be described in greater detail herein below.

The system 1000 includes a plurality of electronic devices 22, each electronic device being associated with a respective user 20. As such, the electronic device can sometimes be referred to as a "client device", "user device" or "client electronic device". It should be noted that the fact that the user device 22 is associated with the user 20 does not need to suggest or imply any mode of operation - such as a need to log in, a need to be registered, or the like.

It should be noted that, although only one user 20 associated with a corresponding electronic device is depicted in Figure 1, it is contemplated that a user 20 associated with a user device 22 is a given user from the plurality of users of the system 1000, and where each one of the plurality of users 20 can be associated with a respective user device 22. The implementation of the user devices is not particularly limited, but as an example, any given user device may be implemented as a personal computer (desktops, laptops, netbooks, etc.), a wireless communication device (such as a smartphone, a cell phone, a tablet and the like), as well as network equipment (such as routers, switches, and gateways).

More generally, the system 1000 may be used as a labelling system for providing indication about a presence of entities in the content of media files, thereby enabling users to search for portions of media files where specific entities are present.

To do so, the system 1000 includes a labelling module 100 and a database 30 communicably connected to the user device 22 over a communication network 50. The labelling module 100 is configured to perform analysis of media files, such as identification and labelling of entities present in the media files. Functions of the labelling module 100 may be executed by a corresponding server, or distributed on a plurality of servers, or any other electronic devices (e.g. controller) suitable for performing the recited functions of the labelling module 100. The media files may be stored in the database 30 and retrieved and/or added by the labelling module 100 and the user device 22.

More specifically, the user device 22, the labelling module 100 and the database 30 are communicatively coupled over the communication network 50 via any wired or wireless communication link including, for example, 4G, LTE, Wi-Fi, or any other suitable connection. In some non-limiting implementations of the present technology, the communication network 50 may be implemented as the Internet. In other implementations of the present technology, the communication network 50 can be implemented differently, such as any wide-area communication network, local-area communication network, a private communication network and the like. How the communication links between each of the user device 22, the labelling module 100 and the database 30 are implemented will depend *inter alia* on how the user device 22, the labelling module 100 and the database 30 are implemented.

In use, the user 20 may access a labelling platform operated by the labelling module 100. The user device 22 may transmit retrieval instructions 24 to the labelling module 100 including an identification of a media file present in the database 30, and an identification of one or more target entities to be searched in the media file. In response, the labelling module 100 may access the media file, perform an analysis thereof by identifying entities present in the media file, and provide the user with an indication of the presence (or absence) of the target entities in the media file. The labelling module 100 may, for example and without limitations, identify extracts of the media file where the target entities have been identified, said extracts being referred to as "target extracts". The labelling module 100 may further provide the target extracts to the user device 22. A labelling pipeline executed by the labelling module 100 is described in greater details herein after.

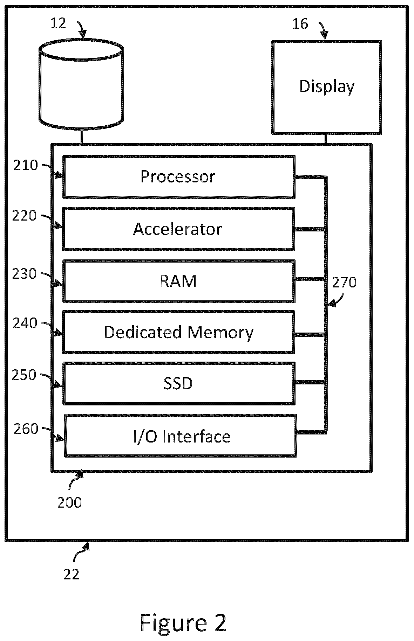

With reference to FIG. 2, there is shown a user device 22 suitable for use in accordance with at least some implementations of the present technology. It is to be expressly understood that the user device 22 as depicted is merely an illustrative implementation of the present technology. In some cases, what are believed to be helpful examples of modifications to the user device 22 may also be set forth below. This is done merely as an aid to understanding, and, again, not to define the scope or set forth the bounds of the present technology. These modifications are not an exhaustive list, and, as a person skilled in the art would understand, other modifications are likely possible. Further, where this has not been done (i.e., where no examples of modifications have been set forth), it should not be interpreted that no modifications are possible and/or that what is described is the sole manner of implementing that element of the present technology. As a person skilled in the art would understand, this is likely not the case. In addition, it is to be understood that the device 22 may provide in certain instances simple implementations of the present technology, and that where such is the case they have been presented in this manner as an aid to understanding. As persons skilled in the art would understand, various implementations of the present technology may be of a greater complexity.

The user device 22 comprises a computing unit 200 that may communicate with the labelling module 100. In some implementations, the computing unit 200 may be implemented by any of a conventional personal computer, a controller, and/or an electronic device (e.g., a server, a controller unit, a control device, a monitoring device etc.) and/or any combination thereof appropriate to the relevant task at hand. In some implementations, the computing unit 200 comprises various hardware components including one or more single or multi-core processors collectively represented by a processor 210, a solid-state drive 250, a random access memory (RAM) 230, a dedicated memory 240 and an input/output interface 260. The computing unit 200 may be a computer specifically designed to operate a machine learning algorithm (MLA) and/or deep learning algorithms (DLA). The computing unit 200 may be a generic computer system.

In some other implementations, the computing unit 200 may be an "off the shelf" generic computer system. In some implementations, the computing unit 200 may also be distributed amongst multiple systems. The computing unit 200 may also be specifically dedicated to the implementation of the present technology. As a person in the art of the present technology may appreciate, multiple variations as to how the computing unit 200 is implemented may be envisioned without departing from the scope of the present technology.

Communication between the various components of the computing unit 200 may be enabled by one or more internal and/or external buses 270 (e.g. a PCI bus, universal serial bus, IEEE 1394 "Firewire" bus, SCSI bus, Serial-ATA bus, ARINC bus, etc.), to which the various hardware components are electronically coupled.

The input/output interface 260 may provide networking capabilities such as wired or wireless access. As an example, the input/output interface 260 may comprise a networking interface such as, but not limited to, one or more network ports, one or more network sockets, one or more network interface controllers and the like. Multiple examples of how the networking interface may be implemented will become apparent to the person skilled in the art of the present technology. For example, but without being limitative, the networking interface may implement specific physical layer and data link layer standard such as Ethernet, Fibre Channel, Wi-Fi or Token Ring. The specific physical layer and the data link layer may provide a base for a full network protocol stack, allowing communication among small groups of computers on the same local area network (LAN) and large-scale network communications through routable protocols, such as Internet Protocol (IP).

According to implementations of the present technology, the solid-state drive 220 stores program instructions suitable for being loaded into the RAM 230 and executed by the processor 210. Although illustrated as a solid-state drive 250, any type of memory may be used in place of the solid-state drive 250, such as a hard disk, optical disk, and/or removable storage media. According to implementations of the present technology, the solid-state drive 220 stores program instructions suitable for being loaded into the RAM 230 and executed by the processor 210. For example, the program instructions may be part of a library or an application.

The processor 210 may be a general-purpose processor, such as a central processing unit (CPU) or a processor dedicated to a specific purpose, such as a digital signal processor (DSP). In some implementations, the processor 210 may also rely on an accelerator 220 dedicated to certain given tasks, such as executing the methods set forth in the paragraphs below. In some implementations, the processor 210 or the accelerator 220 may be implemented as one or more field programmable gate arrays (FPGAs). Moreover, explicit use of the term "processor", should not be construed to refer exclusively to hardware capable of executing software, and may implicitly include, without limitation, application specific integrated circuit (ASIC), read-only memory (ROM) for storing software, RAM, and non-volatile storage. Other hardware, conventional and/or custom, may also be included.

Further, the user device 22 may include a screen or display 16 capable of rendering color images, including media files and/or portion thereof. The user device 22 may also include speakers connected to the display such that an audio track of the media file may be rendered. In some implementations, the display 16 may also be used to render an interface of the labelling platform operated by the labelling module 100, Graphical User Interfaces (GUIs), program output, etc. In some implementations, display 16 may comprise and/or be housed with a touchscreen to permit users 20 to input data via some combination of virtual keyboards, icons, menus, or other Graphical User Interfaces (GUIs). In Some implementations, display 16 may be implemented using a Liquid Crystal Display (LCD) display or a Light Emitting Diode (LED) display, such as an Organic LED (OLED) display. In other implementations, display 16 may be remotely communicatively connected to the user device 22 via a wired or a wireless connection (not shown), so that outputs of the computing unit 200 may be displayed at a location different from the location of the user device 22. In this situation, the display 16 may be operationally coupled to, but housed separately from, other functional units and systems in user device 22.

The user device 22 may be, for example, an iPhone^{®} mobile phone from Apple or a Galaxy^{®} mobile phone or tablet from Samsung, or any other mobile device whose features are similar or equivalent to the aforementioned features. The user device 22 may be, for example and without being limitative, a handheld computer, a personal digital assistant, a cellular phone, a network device, a camera, a smart phone, an enhanced general packet radio service (EGPRS) mobile phone, a network base station, a media player, a navigation device, an e-mail device, a game console, or a combination of two or more of these data processing devices or other data processing devices.

The user device 22 may comprise a memory 12 communicatively connected to the computing unit 200 and configured to store, for example and without limitation media files, target extracts received from the labelling module and/or portions of the media files. The memory 12 may be embedded in the user device 22 as in the illustrated implementation of Figure 2 or located in an external physical location. The computing unit 200 may be configured to access a content of the memory 12 via a network (not shown) such as a Local Area Network (LAN) and/or a wireless connexion such as a Wireless Local Area Network (WLAN).

The user device 22 may also include a power system (not depicted) for powering the various components. The power system may include a power management system, one or more power sources (e.g., battery, alternating current (AC)), a recharging system, a power failure detection circuit, a power converter or inverter and any other components associated with the generation, management and distribution of power in mobile or non-mobile devices.

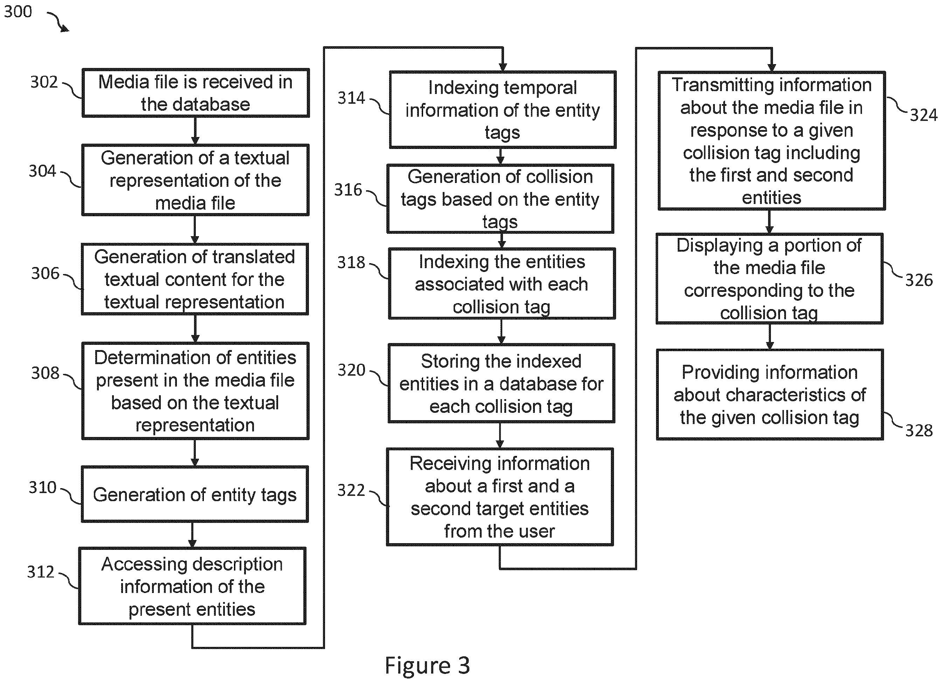

Figure 3 is a representation of a labelling pipeline 300 executed by the labelling module 100 in accordance with some non-limiting implementations of the present technology.

At operation 302, a media file is received in the database 30. The labelling module 100 may be for example connected to other servers over the Internet and collect media files from said other servers. The database 30 may also receive media files from the user device 22 over the communication network.

The labelling module 100 further generates a textual representation of the media file at operation 304. The labelling module 100 may, for example and without limitation, employ speech-to-text components and/or transcript components, to generate the textual representation. For example and without limitations, the labelling module 100 may employ the open-source automatic speech recognition (ASR) system "Mozilla DeepSpeech" developed by MOZILLA, the cloud-based speech-to-text component "Azure Speech to Text" provided by MICROSOFT Azure, and/or the cloud-based automatic speech recognition (ASR) service "Amazon Transcribe" provided by Amazon Web Services (AWS).

The labelling module 100 further generates, at operation 306 translate textual content for the media file such that a textual representation of the media file exists in a plurality of natural languages. As will be described further below, this may enable labelling and entity searches in different natural languages. The labelling module 100 may use translation components and services to do so.

The labelling module 100 further determines entities present in the media file at operation 308. To do so, the labelling module 100 employs Natural Language Processing (NLP) components on the textual representation such as Named Entity Recognition (NER) components and Named Entity Linking (NEL) components. For example, the labelling module 100 may employ a machine learning algorithm (MLA) trained to perform NER and/or NEL tasks. In this implementation, the NLP components are communicably connected to Linked Open Data (LOD) structures that enables the labelling module 100 to determine presence of entities in the media file.

Once the entities have been determined in the media file, the server generates entity tags for each entity present in the media file at operation 310. In this implementation, each entity tag includes information about a type of entity tag (e.g. audio, video, etc), a start timecode, and end timecode and information about the corresponding entity (e.g. an identification thereof).

The labelling module 100 accesses descriptive information about the entities for each entity tag at operation 312 such as entity type, labels, descriptions, aliases, etc. To do so, the labelling module 100 may access, for example and without limitation, the LOD structures (e.g. wikidata.org) to gather additional information related to entities detected at operation 308.

At operation 314, the labelling module 100 indexes temporal information including the start timecodes and the end timecodes of the entity tags. For example, the labelling module 100 may store and index the temporal information in the database 30.

At operation 316, the labelling module 100 generates collision tags based on the entity tags. An example of generation of collision tags is described in greater details herein after. In this implementation, a collision tag includes a collision start time code, a collision end timecode and is indicative of presence of a first and a second entities detected in the media file between the collision start timecode and the collision end timecode. It can be said that the collision tag is indicative of an overlap between the presence of the first entity and the presence of the second entity, or a "concomitant presence" thereof. The collision tag may be indicative of a concomitant presence of more than two entities.

The labelling module 100 further indexes, at operation 318 and for each collision tag, the entities associated said collision tag. The indexation may be stored in a memory at operation 320, for example in the database 30.

At operation 322, the labelling module 100 may receive information and/or indication of a first and a second target entities from the user device 22. For example, the user device 22 may transmit retrieval instructions indicative that the user would like to search for concomitant presence of the first and second target entities in a given media file or in a set of media files that are accessible by the labelling module 100.

In response, the labelling module 100 may parse through the collision tags associated to the media file and, in response to a collision tag including information entities matching the first and second target entities, transmit information about the media file to the user device 22. For example, the labelling module 100 may provide an identification information such a file name, a URL link, the media file or an extract thereof, to the user device 22.

At operation 326, the labelling module 100 may cause the user device 22 to display a portion of the media file. For example, said portion may start at the collision start timecode and ends at the collision end timecode such that the user is provided with an extract where the first and second target entities are concomitantly present.

The labelling module 100 may also provide information about characteristics of the given collision tags such as a time duration thereof, the collision start timecode, the collision start timecode, etc.

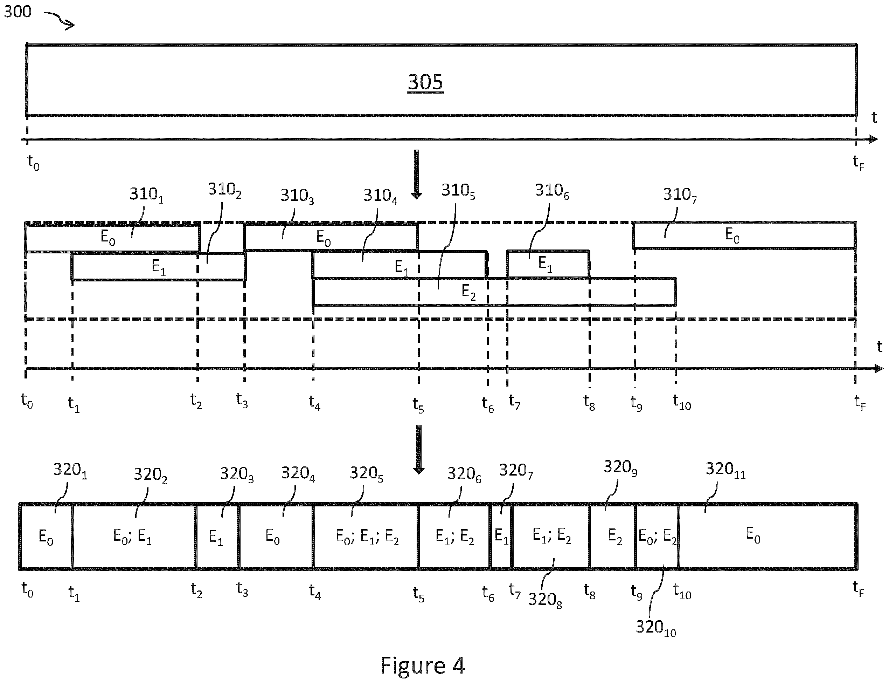

Figure 4 is a representation of an execution of the labelling pipeline 300, or a portion thereof, executed by the labelling module 100. Once the labelling module 100 accesses a media file 305, the labelling module 100 may execute the labelling pipeline 300. For example, the labelling pipeline 300 may be executed on each media file being stored in the database 30 once it is transmitted thereto.

In this example, the media file 305 is a temporal media file (e.g. a video file, an audio file, etc). In other words, the media file 305 has a time duration extending between t₀ and t_{f}. A time duration of the media file is thus t_{f}-t₀.

The labelling module 100 first accesses the media file 305 and further determines entity tags 310 for the media file 305. Each entity tag 310 includes information about a type of entity tag, a start timecode, an end timecode and an entity detected in the media file between the start timecode and the end timecode. For example, a first entity tag 310₁ is indicative that an entity E₀ is present in the media file 305 between t₀ and t₂. The entity tag 310₁ also includes information about a type of entity and an identifier of the entity. For example, the entity may be a human entity, an animal entity such as a dog, an object entity such as piece of furniture, a cloth, etc. Those examples of entity are non-limitative. A second entity tag 310₂ is indicative that an entity E₁ is present in the media file 305 between t₁ and t₃. A third entity tag 310₂ is indicative that the entity E₀ is also present in the media file 305 between t₃ and t₅, and so on. It can be said that the entity tags 310 defines time stamps at end and beginning thereof along a timeline of the media file 305.

In use, the labelling module 100 may determine the entity tags in a number of different manners. In this implementation, the labelling module 100 generates a text file representative of the media file 305. The labelling module 100 may utilize application programming interfaces (APIs) that process the media file 305 to generate the representative text file. For example, in cases where the media file 305 is a video file, the labelling module 100 may generate an audio-description of images of the video file, and a transcript of an audio track of the video file. The audio description being a textual descriptive narration of key visual elements in the video file can be merged with the transcript to form the representative text file. The various APIs can include, but are not limited to, a tone analyzer API, a personality insight API, a text to speech API, a translation API, an audio description API, etc. In the same or other examples where the media file 305 includes audio data, the labelling module 100 may determine the entity tags by employing a speech-to-text component on the audio data. The labelling module 100 may further parse through a text file generated by said speech-to-text component and determine entities present in the media file based on the text file.

The representative text file may further be translated in different natural languages such that a language of the user upon transmitting the retrieval instructions matches at least one of the natural languages into which the representative text file has been translated.

The entities present in the media file 305 are further identified based on the representative text file. In this implementation, the labelling module 100 employs natural language processing (NLP) modules such as named-entity recognition (NER) and/or named-entity linking (NEL) to identify the entities. For example, in the following sentence: "Mr. Sarkozy and Mr. Hollande were seen together in Paris this afternoon with businessman John Doe", five entities may be identified: "Mr. Sarkozy" (human entity), "Mr. Holland" (human entity), "Paris" (city), "businessman" (profession), and "John doe" (human entity).

In the same or alternative implementations, the labelling module 100 employs image recognition algorithms to identify the entities present in the media file and/or generate the representative text file, such as optical character recognition (OCR), pattern matching and gradient matching, facial recognition and/or scene identification or scene change detection.

The labelling module 100 further generates the entity tags 310 based on the identified entities. Each entity tag 310 includes a type of tag (audio, video, *etc.*), a start timecode, an end timecode and a description of the corresponding entity. The entity tags 310 may further be indexed and stored in a database (e.g. the database 30) under, for example and without limitation, the SQL format accessible to the user device 22.

Once the entity tags 310 are determined, the labelling module 100 determines collision tag 320 based on the entity tags 310. Each collision tag extends along a largest period of time between two consecutive time stamps of the entity tags 310. Collision tags 320 are depicted on Figure 3. The collision tags 320 includes information of the entity tags present between the two consecutive time stamps. In this example, a first collision tag 320₁ extends between t₀ and t₁ and is indicative that the entity E₀ is present between those time stamps. A second collision tag 320₂ extends between t₁ and t₂ and is indicative that the entities E₀ and E₁ are present between those time stamps, and so on. The collision tags 320 may further be indexed and stored in a database (e.g. the database 30) under, for example and without limitation, the SQL format accessible to the user device 22.

Broadly speaking, each collision tag 320 includes information about a collision start timecode, a collision end timecode and one or more entities corresponding to the entity tags present between the two consecutive time stamps. A given collision tag 320 may thus be indicative of a plurality of entities being present in the media file 305 between the corresponding time stamps of the collision tag 320. Each entity Eᵢ may also be associated with the collision tags 320 that are indicative of said entity Eᵢ being present between the corresponding time stamps. A Full-text search (FTS) indexing of the entities may be formed to enable relatively fast queries over textual data.

In other words, a given collision tag associates a collision between a first and a second entity tags in response to said first and second collision tags overlap. The given collision tag is generated based on the first and second entity tags. The collision tag includes a collision start time code, a collision end timecode and is indicative of a concomitant presence of the first and second entities detected in the media file between the collision start timecode and the collision end timecode. In this situation, the collision start time code is defined as the latest of the first and second start timecode and the collision end time code is defined as the earliest of the first and second end timecode.

In use, the user 20 may indicate a target entity in the retrieval instructions 24 and an identification of a given media file to be searched. The labelling module 100 may search through the collision tags 320 associated to the media file. Upon determining that a given collision tag 320 is indicative of an entity E₀ that matches the target entity, the labelling module 100 retrieve the collision start timecode and the collision end timecode of said collision tag 320.

In some implementations, in response to determining that a given collision tag includes one or more target entities identified in the retrieval instructions 24, the labelling module 100 extracts a target extract from the media file between the collision start timecode and the collision end timecode of said collision tag 320. In other words, the labelling module 100 generates a new media file being an extract of the media file 305 between the collision start timecode and the collision end timecode. The labelling module 100 may further transmit the target extract to the user device 22. In the example of Figure 3, in the event that the retrieval instructions 24 are indicative that the user 20 desires to search where entities E₁ and E₂ appear in a concomitant manner in the media file 305, the labelling module 100 may provide indication of the collision tags 20₅, 320₆ and 320₈ to the user device 22. More specifically, the labelling module 100 may provide indication of the collision start timecodes and the collision end timecodes of the collision tags 320₅, 320₆ and 320₈ and/or generate and transmit a first target extract of the media file 305 starting at the collision start timecode t₄ of a timeline thereof and ending at the collision end timecode t₅, a second target extract of the media file 305 starting at the collision start timecode t₅ of a timeline thereof and ending at the collision end timecode t₆ and a third target extract of the media file 305 starting at the collision start timecode t₇ of a timeline thereof and ending at the collision end timecode t₈ to the user device 22.

As another example, if the user 20 searches for [E₀, E₁], collision tags 320₂ and 320₅ matches the retrieval instructions 24 and target extracts from t₁ to t₂ and from t₄ to t₅ may be transmitted to the user device 22.

As yet another example, if the user 20 searches for [E₂], no collision tag can be found as only containing E₂. No media file extract is transmitted to the user device 22.

Therefore, it can be said that the media file is pre-processed for search of concomitant presences of entities. The labelling module 100 may parse through the collision tags to determine if the corresponding entities match the target entities of the retrieval instruction. This may help in reducing a delay experienced by the user between transmission of the retrieval instruction and reception, from the labelling module, of identifications of concomitant presences of the target entities in a media file.

In some implementations, the labelling module 100 generates, for each entity tag 310, a textual description of the associated entities in at least one natural language such that one of said at least one natural language may match a natural language of the retrieval instructions 24. In these implementations, the labelling module 100 determines that a given collision tag 320 includes a target entity by determining that the textual entry of the retrieval instruction 24 matches at least partly the textual description of one or more entity associated with the given collision tag 320.

In the same or other implementations, the labelling module 100 indexes the collision tags 320 and execute, upon receiving the retrieval instruction 24, an auto-completion module to complete or adjust the retrieval instruction based on the indexes of the collision tags 320.

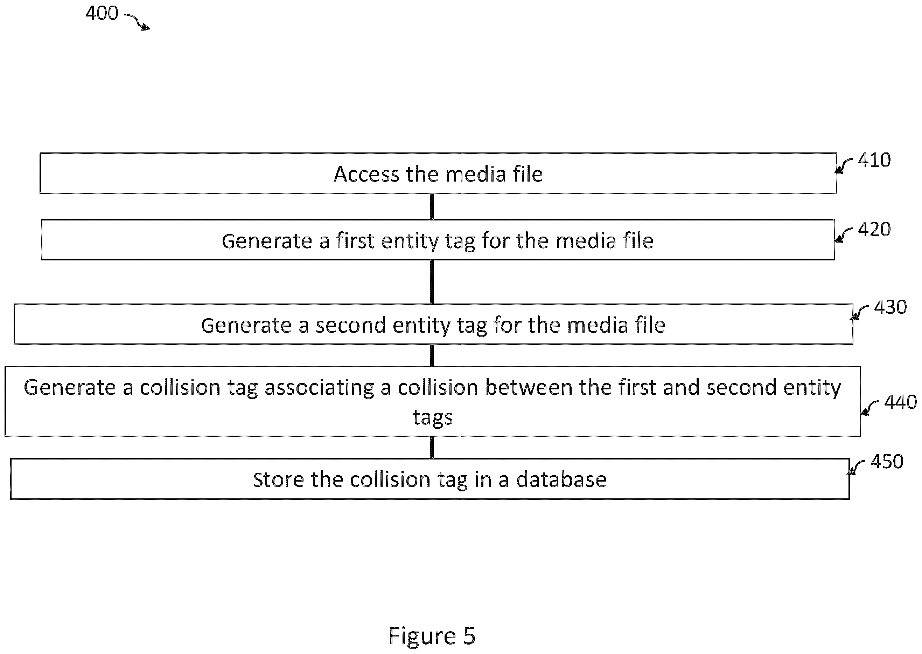

Figure 5 is a flow diagram of a method 400 for labelling of a media file according to some implementations of the present technology. In one or more aspects, the method 400 or one or more steps thereof may be performed by a computing unit or a computer system, such as the labelling module 100. The method 400 or one or more steps thereof may be embodied in computer-executable instructions that are stored in a computer-readable medium, such as a non-transitory mass storage device, loaded into memory and executed by a CPU. Some steps or portions of steps in the flow diagram may be omitted or changed in order.

The method 400 start with accessing, at operation 410, the media file. The media file may be stored in the database 30 or any other component communicably connected to the labelling module 100. The media file may include digital files, online content, audio files, video files, live stream media files or a combination thereof.

The method 400 continues with generating, at operation 420, a first entity tag for the media file. The first entity tag includes information about a first start timecode, a second end timecode and a presence of a first entity detected in the media file between the first start timecode and the second end timecode.

The method 400 continues with generating, at operation 430, a second entity tag for the media file. The second entity tag includes information about a second start timecode, a second end timecode and a presence of a second entity detected in the media file between the second start timecode and the second end timecode.

In some implementations, the media file may include audio data. The method 400 may generate the first and second entity tags by employing a speech-to-text component on the audio data. In these implementations, the method 400 may also include parsing through a text file generated by the speech-to-text component and determining entities present in the media file based on the text file.

In the same or other implementations, the media file includes video data. Generating the and second first entity tags includes employing a transcript component on the video data to generate a transcript text file representative of the video data under a textual form and executing a Natural Language Processing machine learning algorithm (MLA) to determine entities present in the media file. The MLA may be trained to perform Named Entity Recognition tasks and/or Named Entity Linking tasks.

The first and second entity tags may be associated with a type of entity tag selected in a group of entity tag types, said group including: audio entity tag type and video entity tag type.

The method 400 continues with generating, at operation 440, a collision tag associating a collision between the first and second entity tags. The collision tag is based on the first and second entity tags and includes a collision start time code, a collision end timecode and a presence of the first and second entities detected in the media file between the collision start timecode and the collision end timecode. In this implementation, the collision start time code is defined as the latest of the first and second start timecode and the collision end time code is defined as the earliest of the first and second end timecode.

The method 400 continues with storing, at operation 450, the collision tag in a database, such as database 30. The first and second entity tags and the collision tag may be saved in an SQL database accessible to a user.

In some implementations, the method 400 further includes receiving a retrieval instruction from a user. For example, the retrieval instruction may be received by the labelling module 100 from the user device 22. The retrieval instruction includes a first target entity and a second target entity. The method 400 further includes accessing the database and, in response to determining that the first and the second target entities are associated with a given collision tag of the database, transmitting, to the user, a first indication associated with the given collision tag and a second indication associated with the given media file associated with the given collision tag. The first indication may for example includes the start and end timecodes of the collision tag. The second indication may include the media file, a portion thereof, a name thereof, a URL link, etc. For example, the method 400 may further include, in response to determining that the first and the second target entities are associated with the given collision tag of the database, extracting a target extract from the media file between the collision start timecode and the collision end timecode and transmitting the target extract to the user.

In some implementations, generating the first entity tag includes generating a textual description of the first entities in at least one natural language. The retrieval instruction may include a textual entry, and determining that the first target entity is associated with the given collision tag of the database includes determining that the textual entry matches at least partly the textual description of an entity associated with the given collision tag. Therefore, if the user enters "Président de la France" or "President of France", the same entity is identified in the media file as both entries are associated with a same entity.

In some implementations, the method 400 also includes, upon receiving the retrieval instruction, executing an auto-completion module to complete or adjust the retrieval instruction based on an identification of the first and second entity tags.

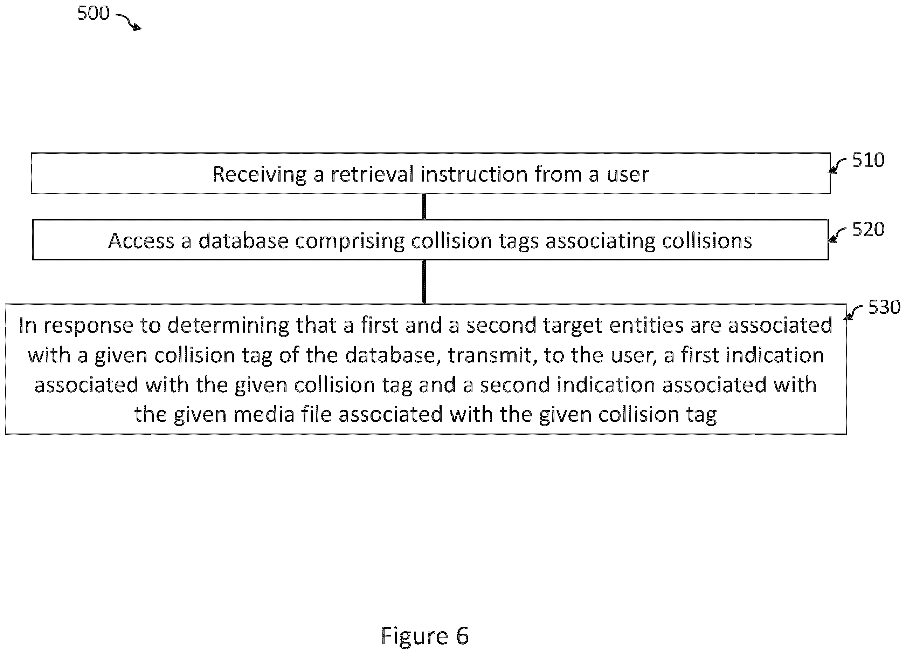

Figure 6 is a flow diagram of a method 500 for retrieving collisions in media files according to some implementations of the present technology. In one or more aspects, the method 400 or one or more steps thereof may be performed by a computing unit or a computer system, such as the labelling module 100. The method 500 or one or more steps thereof may be embodied in computer-executable instructions that are stored in a computer-readable medium, such as a non-transitory mass storage device, loaded into memory and executed by a CPU. Some steps or portions of steps in the flow diagram may be omitted or changed in order.

The method 500 start with receiving, at operation 510, a retrieval instruction from a user, the retrieval instruction comprising a first target entity and a second target entity.

The method 500 continues with accessing, at operation 520, a database including collision tags associating collisions, each of the collision tags comprising a collision start time code, a collision end timecode and a presence of entities detected in the media file between the collision start timecode and the collision end timecode.

The method 500 continues with transmitting, at operation 520, in response to determining that the first and the second target entities are associated with a given collision tag of the database, a first indication associated with the given collision tag and a second indication associated with the given media file associated with the given collision tag to the user.

In some implementations, the collision tag has been generated by executing, for each of the media files, generating a first entity tag and a second entity tag. The first entity tag includes information about a first start timecode, a second end timecode and a presence of a first entity detected between the first start timecode and the second end timecode. The second entity tag includes information about, a second start timecode, a second end timecode and a presence of a second entity detected between the second start timecode and the second end timecode. The collision tag is further generated based on the first and second entity tags and associates a collision between the first and second entity tags. The collision tag includes a collision start time code, a collision end timecode and a presence of the first and second entities detected between the collision start timecode and the collision end timecode. The collision start time code is defined as the latest of the first and second start timecode and the collision end time code is defined as the earliest of the first and second end timecode

While the above-described implementations have been described and shown with reference to particular steps performed in a particular order, it will be understood that these steps may be combined, sub-divided, or re-ordered without departing from the teachings of the present technology. At least some of the steps may be executed in parallel or in series. Accordingly, the order and grouping of the steps is not a limitation of the present technology.

As an example, Figure 5 is a schematic block diagram of a controller 700 for executing the labelling module 100 according to an implementation of the present technology. The controller 700 comprises a processor or a plurality of cooperating processors (represented as a processor 710 for simplicity), a memory device or a plurality of memory devices (represented as a memory device 730 for simplicity), and a input/output interface 720 allowing the controller 700 to communicate with other components of the system 1000 and/or other components in remote communication with the labelling module 100. The processor 710 is operatively connected to the memory device 730 and to the input/output interface 720. The memory device 730 includes a storage for storing parameters 734, including for example and without limitation the above-mentioned target extracts. The memory device 730 may comprise a non-transitory computer-readable medium for storing code instructions 732 that are executable by the processor 710 to allow the controller 700 to perform the various tasks allocated to the controller 700 in the method 400.

The controller 700 is operatively connected, via the input/output interface 720, to the user devices 22 and the database 30. The controller 700 executes the code instructions 732 stored in the memory device 730 to implement the various above-described functions that may be present in a particular implementation. Figure 5 as illustrated represents a non-limiting implementation in which the controller 700 orchestrates operations of the labelling module 100. This particular implementation is not meant to limit the present disclosure and is provided for illustration purposes.

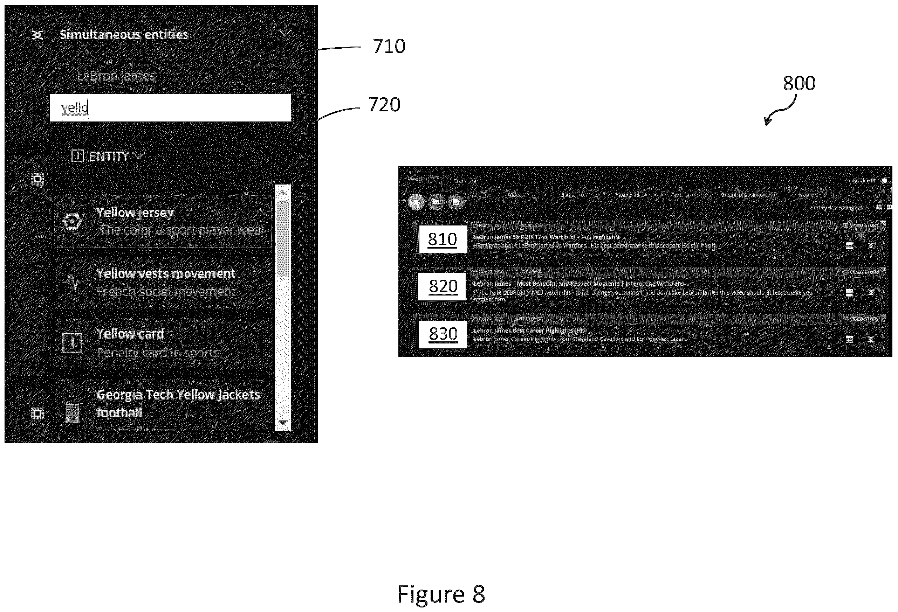

Figure 8 shows an illustrative implementation of an interface rendered by the user device 22. In this example, the user has already entered a first target entity indication 710 which is "LeBron James". The user is entering an incomplete entity indication 720, namely "yello". The aforementioned auto-completion module may be executed by the labelling module 100 which parse though the entity tags and provide suggestion of entity tags to the user that correspond to the incomplete entity indication 720. In this example, the user selects a second target entity indication 720 that is "yellow jersey".

Therefore, the user is looking for concomitant appearance of LeBron James and a yellow jersey, and the corresponding retrieval instruction includes an identification of the two target entities. In response, the labelling module may thus search for media files in the database 30 that are associated with collision tags including the two entities "LeBron James" and "yellow jersey". Interface 800 includes a plurality of media files 810, 820 and 830 that correspond to the retrieval instruction. More specifically, each of the media file 810, 820 and 830 is associated with a collision tag that includes the two target entities "LeBron James" and "yellow jersey". Therefore, said two entities are present in a concomitant manner in each of these media files 810, 820 and 830.

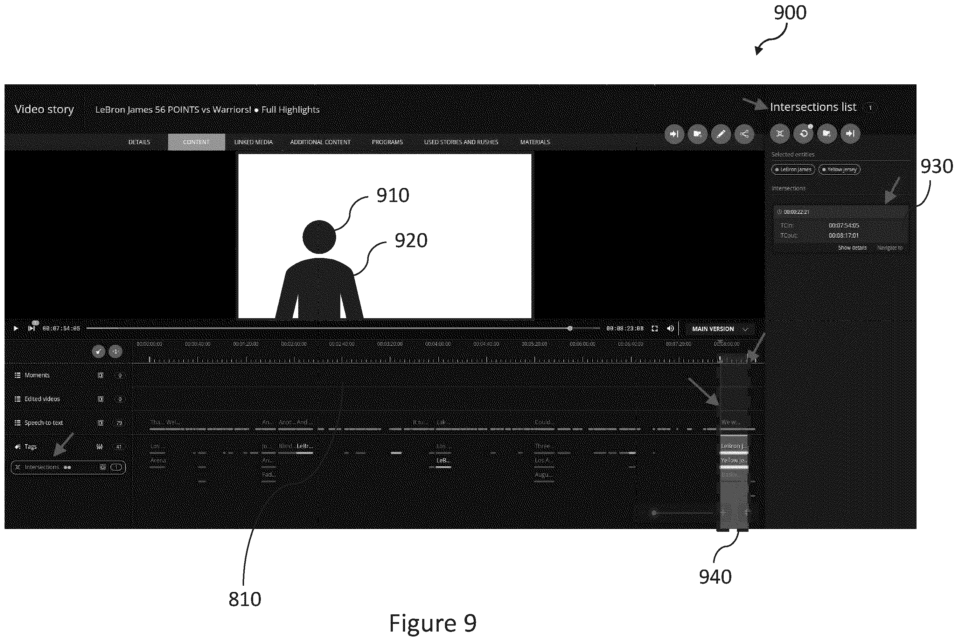

Figure 9 is an illustrative interface 900 rendered by the user device 22 once the user has selected one of the media files 810, 820 or 830. In this example, the media file 810 has been selected, the user 20 is provided with indication of an extract 940 of the media file 810 where the target entities appear in a concomitant manner. The extract 940 is displayed including a first target entity 910 corresponding to the first target entity indication 710 and a second target entity 920 corresponding to the second target entity indication 720. Information 930 about the collision tag that includes the first and second target entities may also be provided to the user 22. In this example, the start and end timecodes of the collision tag are provided.

It should be expressly understood that not all technical effects mentioned herein need to be enjoyed in each and every implementation of the present technology.

Modifications and improvements to the above-described implementations of the present technology may become apparent to those skilled in the art. The foregoing description is intended to be exemplary rather than limiting. The scope of the present technology is therefore intended to be limited solely by the scope of the appended claims.

## Claims

1. A computer-implemented method (400) for labelling of a media file (305), the method comprising:
accessing the media file (305);
generating a first entity tag (310₁) for the media file, the first entity tag (310₁) comprising information about a first start timecode, a first end timecode and a presence of a first entity detected in the media file (305) between the first start timecode and the first end timecode;
generating a second entity tag (310₂) for the media file (305), the second entity tag (310₂) comprising information about a second start timecode, a second end timecode and a presence of a second entity detected in the media file between the second start timecode and the second end timecode;
generating a collision tag (320₂) associating a collision between the first and second entity tags (310₁, 310₂), the collision tag (320₂) being based on the first and second entity tags, the collision tag comprising a collision start time code, a collision end timecode and a presence of the first and second entities detected in the media file between the collision start timecode and the collision end timecode, the collision start time code being defined as the latest of the first and second start timecode, the collision end time code being defined as the earliest of the first and second end timecode; and
storing the collision tag in a database (30).

2. The method (400) of claim 1, further comprising:
receiving a retrieval instruction (24) from a user (20), the retrieval instruction comprising a first target entity and a second target entity;
accessing the database (30); and
in response to determining that the first and the second target entities are associated with a given collision tag of the database, transmitting, to the user, a first indication associated with the given collision tag and a second indication associated with the given media file associated with the given collision tag.

3. The method (400) of claim 2, further comprising:
in response to determining that the first and the second target entities are associated with the given collision tag of the database, extracting a target extract from the media file (305) between the collision start timecode and the collision end timecode; and
transmitting the target extract to the user (20).

4. The method (400) of claim 2 or 3, wherein:
generating the first entity tag comprises generating a textual description of the first entities in at least one natural language,
receiving a retrieval instruction comprises receiving a textual entry, and
determining that the first target entity is associated with the given collision tag of the database comprises determining that the textual entry matches at least partly the textual description of an entity associated with the given collision tag.

5. The method (400) of any one of claims 1 to 4, wherein:
the media file (305) comprises audio data, and
generating the first and second entity tags comprises employing a speech-to-text component on the audio data.

6. The method (400) of claim 5, wherein generating the first and second entity tags (310₁, 310₂) comprises:
parsing through a text file generated by the speech-to-text component; and
determining entities present in the media file based on the text file.

7. The method (400) of any one of claims 1 to 6, wherein the first entity tag (310₁) is associated with a type of entity tag selected in a group of entity tag types, said group comprising: audio entity tag type and video entity tag type.

8. The method (400) of any one of claims 1 to 7, wherein:
the media file (305) comprises video data, and
generating the first entity tag (310₁) comprises:
employing a transcript component on the video data to generate a transcript text file representative of the video data under a textual form;
executing a Natural Language Processing machine learning algorithm to determine entities present in the media file.

9. The method (400) of claim 8, wherein the MLA is trained to perform Natural Language Processing tasks.

10. The method (400) of claim 9, wherein the MLA is trained to perform Named Entity Recognition tasks.

11. A computer-implemented method (500) for retrieving collisions in media files, the method comprising:
receiving a retrieval instruction (24) from a user (20), the retrieval instruction (24) comprising a first target entity and a second target entity;
accessing a database (30), the database (30) comprising collision tags (320) associating collisions, each of the collision tags (320) comprising a collision start time code, a collision end timecode and a presence of entities detected in the media file between the collision start timecode and the collision end timecode; and
in response to determining that the first and the second target entities are associated with a given collision tag of the database, transmitting, to the user, a first indication associated with the given collision tag (320) and a second indication associated with the given media file associated with the given collision tag (320).

12. The method (500) of claim 11, wherein transmitting, to the user, the first indication associated with the given collision tag (320) and the second indication associated with the given media file associated with the given collision tag (320) comprises displaying, on a graphical user interface (GUI), the first indication and the second indication along with a visual representation indicative of the given media file.

13. The method (500) of claim 11, wherein the collision tag (320) has been generated by executing, for each of the media files:
generating a first entity tag, the first entity tag comprising information about a first start timecode, a second end timecode and a presence of a first entity detected between the first start timecode and the second end timecode;
generating a second entity tag, the second entity tag comprising information about, a second start timecode, a second end timecode and a presence of a second entity detected between the second start timecode and the second end timecode; and
generating the collision tag associating a collision between the first and second entity tags, the collision tag comprising a collision start time code, a collision end timecode and a presence of the first and second entities detected between the collision start timecode and the collision end timecode, the collision start time code being defined as the latest of the first and second start timecode, the collision end time code being defined as the earliest of the first and second end timecode.

14. A system for concomitant labelling of a media file (305), the system comprising a controller and a memory storing a plurality of executable instructions which, when executed by the controller, cause the system to perform the computer-implemented method of any one of claims 1 to 13.

15. A non-transitory computer-readable medium comprising computer-readable instructions that, upon being executed by a system, cause the system to perform the computer-implemented method of any one of claims 1 to 13.
